# EUROPÄISCHE PATENTSCHRIFT

(11) **EP 4 029 202 B1**
(45) Veröffentlichungstag und Bekanntmachung des Hinweises auf die Patenterteilung: **11.12.2024**
(21) Anmeldenummer: 20753726.7
(22) Anmeldetag: 06.08.2020
(51) Int. Cl.: H04L 12/413

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM AND METHOD FOR COMMUNICATION IN A SERIAL BUS SYSTEM
STATION D'ABONNÉ POUR UN SYSTÈME DE BUS SÉRIE ET PROCÉDÉ DE COMMUNICATION DANS UN SYSTÈME DE BUS SÉRIE

(30) Priorität: 11.09.2019 DE 102019213783
(43) Veröffentlichungstag der Anmeldung: 20.07.2022
(73) Patentinhaber: Robert Bosch GmbH, 70442 Stuttgart (DE)
(72) Erfinder: HARTWICH, Florian, 72762 Reutlingen (DE); BAILER, Franz, 72116 Moessingen (DE); MUTTER, Arthur, 73765 Neuhausen (DE)
(86) Internationale Anmeldenummer: PCT/EP2020/072126
(87) Internationale Veröffentlichungsnummer: WO 2021/047834

(56) Entgegenhaltungen:
- EP-A1- 3 531 629
- EP-A2- 2 728 805
- DE-A1- 102012 200 997
- DE-A1- 102015 209 196

## Beschreibung

### Technisches Gebiet

Die vorliegende Erfindung betrifft eine Teilnehmerstation für ein serielles Bussystem und ein Verfahren zur Kommunikation in einem seriellen Bussystem, das mit hoher Datenrate sowie großer Flexibilität und großer Fehlerrobustheit arbeitet.

### Stand der Technik

Bussysteme für die Kommunikation zwischen Sensoren und Steuergeräten, beispielsweise in Fahrzeugen, sollen je nach der Anzahl an Funktionen einer technischen Anlage bzw. eines Fahrzeugs, die Übertragung einer großen Datenmenge ermöglichen. Dabei wird oft gefordert, dass die Daten schneller vom Sender zum Empfänger zu übertragen sind als bisher und bei Bedarf auch große Datenpakete übertragbar sind.

Bei Fahrzeugen ist derzeit ein Bussystem in der Einführungsphase, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen. CAN FD wird von den meisten Herstellern im ersten Schritt mit 2Mbit/s Datenbitrate und 500kbit/s Arbitrationsbitrate im Fahrzeug eingesetzt.

Um noch größere Datenraten zu ermöglichen, wird derzeit ein Nachfolgebussystem für CAN FD entwickelt, das nachfolgend CAN XL genannt wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

DE 10 2012 200 997 A1 zeigt ein Verfahren und eine Vorrichtung zur Prüfung der korrekten Funktion einer seriellen Datenübertragung in einem Bussystem mit mindestens zwei Busteilnehmern. Hierbei wird in einem Busteilnehmer (Sendeknoten), der Sender eines Rahmens in einem Sendesignal auf den Bus ist, durch einen Vergleich eines an die Busanschlusseinheit gesendeten Sendesignals mit dem von der Busanschlusseinheit empfangenen Empfangssignals die korrekte Funktion der Datenübertragung während der Übertragung geprüft. Um diesen Vergleich durchzuführen, ermittelt der sendende Busteilnehmer eine Zeitverzögerung zwischen dem von der Busanschlusseinheit gesendeten Sendesignal und dem von der Busanschlusseinheit empfangenen Empfangssignal, um ein um die Zeitverzögerung verzögertes Sendesignal für den durchzuführenden Vergleich zu erzeugen.

Bei der Übertragung von Daten in einem Rahmen über einen Kanal (CAN Bus) kann es insbesondere durch äußere Einflüsse, insbesondere Einstrahlung, immer zu Verfälschungen kommen. Die Aufgabe des Kommunikationsprotokolls von CAN XL ist es unter anderem, verfälscht empfangene Rahmen zu erkennen und zu verwerfen. Die Güte der Fehlererkennung lässt sich über die Restfehlerwahrscheinlichkeit ausdrücken. Die Restfehlerwahrscheinlichkeit gibt an, wie wahrscheinlich es ist, dass ein Rahmen trotz Fehlers bei einer empfangenden Teilnehmerstation (Empfangsknoten) des Bussystems, die kein Sender des Rahmens ist, als korrekt akzeptiert wird.

Für die funktionale Sicherheit eines Systems ist es sehr vorteilhaft und wichtig, dass die Restfehlerwahrscheinlichkeit möglichst gering ist. Eine Klasse 1von Fehlern, nämlich fälschlicherweise invertiert abgetastete Bits (Bit Flips), und/oder eine Klasse 2 von Fehlern, nämlich lokal gehäufte Bitfehler (Burst Fehler), können mit Hilfe einer Prüfsumme (CRC = Cyclic Redundancy Check) erkannt werden, die im Rahmen übertragen wird.

Problematisch ist jedoch, wenn durch externe Einstrahlung Flanken erzeugt oder verschoben werden. Dies kann dazu führen, dass die empfangende Teilnehmerstation (Empfangsknoten) des Bussystems, die kein Sender des Rahmens ist, ein versetztes Abtasten des Bitstroms im empfangenen Rahmen vornimmt. Das Abtasten des Bitstroms kann um ein oder mehrere Bits versetzt sein, was auch als eine Klasse 3 von Fehlern bezeichnet wird. Bei derartigen Fehlern ist eine derartige empfangende Teilnehmerstation mit der Prüfsumme (CRC) nicht in der Lage, den Fehler sicher zu detektieren.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen Fehler aufgrund von zusätzlichen oder verschobenen Flanken in einem Bitstrom mit großer Sicherheit erkannt werden, um auch bei hoher Datenrate und einer Steigerung der Menge der Nutzdaten pro Rahmen eine große Fehlerrobustheit der Kommunikation zu realisieren.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, und eine Sende-/Empfangseinrichtung zum Senden eines von der Kommunikationssteuereinrichtung erzeugten Sendesignals auf einen Bus des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheiden kann von einer Bitzeit eines in der zweiten Kommunikationsphase gesendeten Signals, wobei die Kommunikationssteuereinrichtung ausgestaltet ist, das Sendesignal gemäß einem Rahmen zu erzeugen und in dem Rahmen mindestens ein Feld einzufügen, das zum Prüfen ausgestaltet ist, ob der Bitstrom des Rahmens in einer Teilnehmerstation des Bussystems, die den Rahmen empfängt, um mindestens ein Bit im Vergleich zu dem erwarteten Rahmen versetzt ist, wie in Anspruch 1 beschrieben.

Durch die Ausgestaltung der Teilnehmerstation kann die Restfehlerwahrscheinlichkeit für einen vom Bus empfangenen Rahmen gesenkt werden. Dadurch kann ein Empfänger des Rahmens die richtige Rahmenlänge dekodieren und daher auch die Prüfsumme (CRC = Cyclic Redundancy Check) am Ende des Rahmens an der richtigen Stelle prüfen. Dadurch können Fehler bei der Kommunikation im Bussystem schnell und sicher aufgedeckt werden.

Mit der Teilnehmerstation ist es möglich, die Erkennung eines versetzten Datenstroms bis zu N Bit Verschiebung zu garantieren. Dies ermöglicht eine sichere Übertragung von Rahmen über den Bus selbst bei Einstrahlung.

Vorteilhaft ist außerdem, dass die Maßnahmen zur Senkung der Restfehlerwahrscheinlichkeit in Bezug auf Fehler der Klasse 3 nur eine sehr geringe Anzahl an Steuerbits zusätzlich erfordert. Dabei ist das neue Feld FCP sehr geschickt im Rahmen untergebracht. Als Folge davon ist der Überhang an Daten (Daten-Overhead) von zusätzlich zu den eigentlich zu übertragenden Nutzdaten sehr gering.

Wird jedes fixed Stuff-Bit durch ein FCP Feld ersetzt, kann der Überhang an Daten (Daten-Overhead) sogar Null sein. Zudem ist dabei die Formatprüfung (Formatcheck) sehr stark, da mehrere fixed Stuff-Bits und damit FCP Felder ersetzt werden. Durch den geringen oder nicht erhöhten Überhang an Daten (Daten-Overhead) kann die übertragbare Nettodatenrate optimiert werden, so dass die Kommunikation in dem Bussystem nicht mehr als notwendig verlangsamt wird.

Infolgedessen kann mit der Teilnehmerstation auch bei Steigerung der Menge der Nutzdaten pro Rahmen ein Senden und Empfangen der Rahmen mit großer funktionaler Sicherheit bei großer Flexibilität im Hinblick auf aktuelle Ereignisse im Betrieb des Bussystems und mit geringer Fehlerquote gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Gemäß einem Ausführungsbeispiel ist die Kommunikationssteuereinrichtung ausgestaltet, das mindestens eine Feld nach einem Datenfeld in dem Rahmen einzufügen. Hierbei kann die Kommunikationssteuereinrichtung ausgestaltet sein, das mindestens eine Feld in dem Rahmen nach einer Rahmenprüfsumme einzufügen, die über alle Bits in dem Rahmen gebildet wurde.

Gemäß einem anderen Ausführungsbeispiel ist die Kommunikationssteuereinrichtung ausgestaltet, das mindestens eine Feld vor einem Datenfeld einzufügen, in dem Nutzdaten des Rahmens eingefügt sind.

Für eine besonders hohe Nettodatenrate ist die Kommunikationssteuereinrichtung ausgestaltet, das mindestens eine Feld derart auszugestalten und/oder anzuordnen, dass der Inhalt des mindestens einen Felds in einer empfangenden Teilnehmerstation nicht nur für die Funktion der Prüfung des Versatzes des Bitstroms heranzuziehen ist, sondern auch für eine davon verschiedene Funktion.

Gemäß noch einem anderen Ausführungsbeispiel ist die Kommunikationssteuereinrichtung ausgestaltet, in den Rahmen immer nach einer festen Zahl von Bits eines der genannten Felder einzufügen.

Denkbar ist, dass die Kommunikationssteuereinrichtung ausgestaltet ist, das mindestens eine Feld als fixed Stuff-Bit in dem Rahmen einzufügen, wobei die Kommunikationssteuereinrichtung ausgestaltet ist, alle fixed Stuff-Bits in den Rahmen gemäß einer festen Bit-Stuffing-Regel einzufügen, gemäß welcher nach einer festen Zahl von Bits ein fixed Stuff-Bit einzufügen ist. Hierbei ist die Kommunikationssteuereinrichtung möglicherweise ausgestaltet, den Wert des Felds abhängig davon zu wählen, welcher Wert für das Stuff-Bit zu wählen wäre, damit in dem Rahmen nach fünf gleichen Bits in Folge ein inverses Stuff-Bit eingefügt wird.

Optional ist die Kommunikationssteuereinrichtung ausgestaltet, für alle der zuvor genannten Felder in dem Rahmen denselben Wert zu verwenden.

In einer speziellen Ausgestaltung ist die Kommunikationssteuereinrichtung ausgestaltet, für das mindestens eine Feld eine gerade Zahl von M Bits zu verwenden, wobei die erste Hälfte der M Bits jeweils denselben ersten Wert haben, und wobei die zweite Hälfte der M Bits jeweils denselben zweiten Wert haben, der invers zu dem ersten Wert ist.

In einer anderen speziellen Ausgestaltung ist die Kommunikationssteuereinrichtung ausgestaltet, in dem mindestens einen Feld mindestens die niederwertigsten Bits der Anzahl der in Rahmen eingefügten fixed Stuff-Bits einzufügen.

In noch einer anderen speziellen Ausgestaltung ist die Kommunikationssteuereinrichtung ausgestaltet, in dem mindestens einen Feld mindestens die niederwertigsten Bits der Anzahl von Rahmen einzufügen, die von der Kommunikationssteuereinrichtung bereits auf den Bus gesendet wurden.

Denkbar ist, dass die Kommunikationssteuereinrichtung ausgestaltet ist, nach einem Umschalten der zweiten Kommunikationsphase in die erste Kommunikationsphase ein Bit vorzusehen, während welchem die Sende-/Empfangseinrichtung Zeit zum Umschalten in die zweite Kommunikationsphase hat, wobei die Kommunikationssteuereinrichtung ausgestaltet ist, in dem Fall, in welchem die Teilnehmerstation des Bussystems, den Rahmen empfängt, jedoch kein Sender des Rahmens ist, das Bit zum Prüfen zu verwenden, ob der Bitstrom des empfangenen Rahmens um mindestens ein Bit im Vergleich zu dem erwarteten Rahmen versetzt ist.

Möglich ist, dass der für die Nachricht gebildete Rahmen kompatibel zu CAN FD aufgebaut ist, wobei in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 15 gelöst. Das Verfahren wird mit einer Teilnehmerstation des Bussystems ausgeführt, die eine Kommunikationssteuereinrichtung und eine Sende-/Empfangseinrichtung aufweist, wobei das Verfahren die Schritte aufweist, Steuern, mit der Kommunikationssteuereinrichtung einer Kommunikation der Teilnehmerstation mit mindestens einer anderen Teilnehmerstation des Bussystems, und Senden, mit der Sende-/Empfangseinrichtung, eines von der Kommunikationssteuereinrichtung erzeugten Sendesignals auf einen Bus des Bussystems, so dass sich für eine Nachricht, die zwischen Teilnehmerstationen des Bussystems ausgetauscht wird, die Bitzeit eines in der ersten Kommunikationsphase auf den Bus gesendeten Signals unterscheiden kann von einer Bitzeit eines in der zweiten Kommunikationsphase gesendeten Signals, wobei die Kommunikationssteuereinrichtung das Sendesignal gemäß einem Rahmen erzeugt und in den Rahmen mindestens ein Feld einfügt, das zum Prüfen ausgestaltet ist, ob der Bitstrom des Rahmens in einer Teilnehmerstation des Bussystems, die den Rahmen empfängt, um mindestens ein Bit im Vergleich zu dem erwarteten Rahmen versetzt ist, wie in Anspruch 15 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-XL_H und CAN-XL_L bei der Teilnehmerstation gemäß dem ersten Ausführungsbeispiel;
Fig. 5 einen zeitlichen Verlauf einer Differenzspannung VDIFF der Bussignale CAN-XL_H und CAN-XL_L bei der Teilnehmerstation gemäß dem ersten Ausführungsbeispiel;
Fig. 6 ein Schaubild zur Veranschaulichung des Aufbaus einer Nachricht, die von einer Teilnehmerstation des Bussystems gemäß einem zweiten Ausführungsbeispiel gesendet werden kann; und
Fig. 7 ein Schaubild zur Veranschaulichung des Aufbaus einer Nachricht, die von einer Teilnehmerstation des Bussystems gemäß einem dritten Ausführungsbeispiel gesendet werden kann.

In den Figuren sind gleiche oder funktionsgleiche Elemente, sofern nichts anderes angegeben ist, mit denselben Bezugszeichen versehen.

### Beschreibung der Ausführungsbeispiele

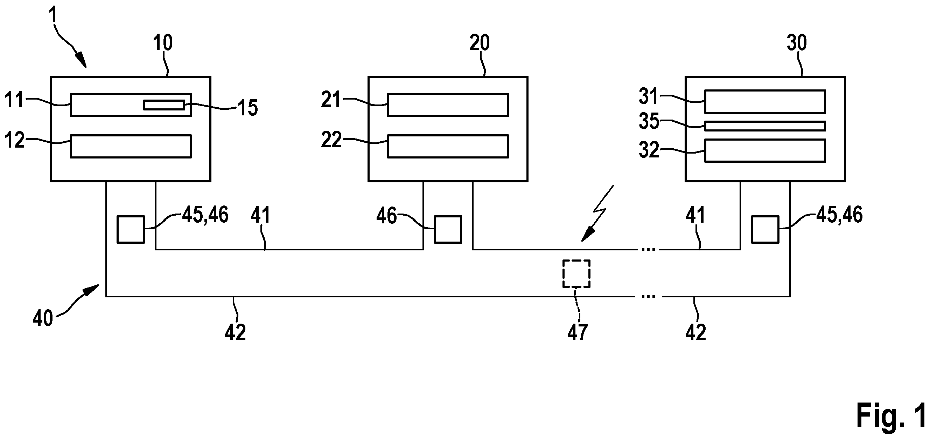

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Formatprüfmodul 15. Die Teilnehmerstation 20 hat eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und ein Formatprüfmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

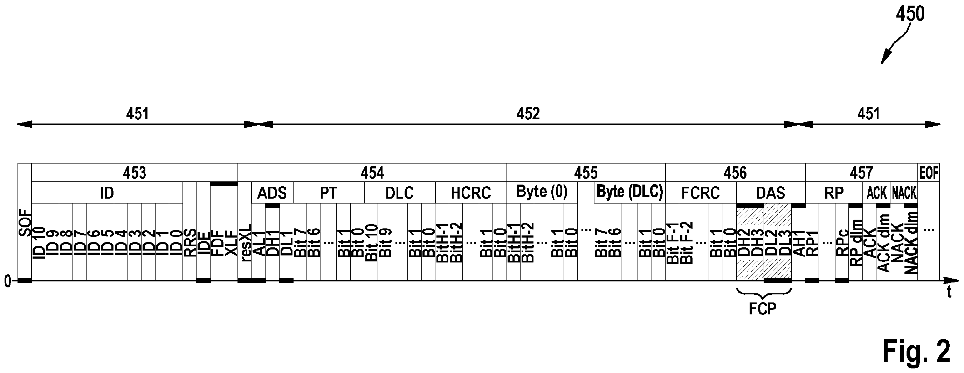

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist, und bei welchem das jeweilige Formatprüfmodul 15, 35 zum Einsatz kommt. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtung 32 bereitzustellen oder von dieser zu empfangen. Auch hierbei kommen die jeweiligen Formatprüfmodule 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachrichtübertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN XL-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN XL-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme FCRC und eine Umschaltsequenz ADS sowie ein Bestätigungsfeld 457.

In der Arbitrationsphase 451 wird mit Hilfe eines Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens bzw. der Nachricht 45 aus dem Datenfeld 455 sowie das Prüfsummenfeld 456 für die Prüfsumme FCRC und außerdem ein Feld DAS gesendet, das zur Umschaltung von der Datenphase 452 zurück zur Datenphase 451 dient.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte oder einen beliebigen anderen Wert.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN XL Format, das nachfolgend beschrieben ist.

Bei dem vorliegenden Ausführungsbeispiel sind CAN XL und CAN FD kompatibel. Hierbei wird das von CAN FD bekannte res-Bit, das nachfolgend XLF-Bit genannt ist, für die Umschaltung von dem CAN FD Format zu dem CAN XL Format genutzt. Daher sind die Rahmenformate von CAN FD und CAN XL bis zum res-Bit gleich. Ein Empfänger erkennt erst bei dem res-Bit, in welchem Format der Rahmen gesendet wird. Eine CAN XL Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) mit 11 Bit verwendet wird, ist optional ein CAN XL Erweitertes Rahmenformat möglich, bei dem ein Identifizierer (Identifier) mit 29 Bit verwendet wird. Dies ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher ist der bekannte Aufbau hier nicht weiter erläutert. Bits, die an ihrer unteren Linie in Fig. 2 mit einem dicken Strich dargestellt sind, werden in dem Rahmen 450 als dominant oder ,0` gesendet. Bits, die an ihrer oberen Linie in Fig. 2 mit einem dicken Strich dargestellt sind, werden in dem Rahmen 450 als rezessiv oder ,1' gesendet. In der CAN XL Datenphase 452 werden symmetrische ,1' und ,0` Pegel verwendet, statt rezessiver und dominanter Pegel.

Allgemein werden bei der Erzeugung des Rahmens 450 zwei unterschiedliche Stuffing-Regeln angewendet. Bis zum XLF-Bit im Steuerfeld 454 gilt die dynamische Bit-Stuffing-Regel von CAN FD, so dass nach 5 gleichen Bits in Folge ein inverses Stuff-Bit einzufügen ist. Nach einem resXL-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden, wie auch später noch genauer beschrieben.

In dem Rahmen 450 folgt direkt nach dem FDF-Bit das XLF-Bit, das von der Position her dem "res Bit" im CAN FD Base Frame Format entspricht, wie zuvor erwähnt. Wird das XLF-Bit als 1, also rezessiv, gesendet, identifiziert es damit den Rahmen 450 als CAN XL-Rahmen. Für einen CAN FD Rahmen setzt die Kommunikationssteuereinrichtung 11 das XLF-Bit als 0, also dominant.

Nach dem XLF-Bit folgt in dem Rahmen 450 ein resXL-Bit, das ein dominantes Bit für die zukünftige Nutzung ist. Das resXL muss für den Rahmen 450 als 0, also dominant, gesendet werden. Empfängt die Teilnehmerstation 10 jedoch ein resXL-Bit als 1, also rezessiv, geht die empfangende Teilnehmerstation 10 beispielsweise in einen Protokollausnahmezustand (Protocol Exception State), so wie es bei einer CAN FD Nachricht 46 für ein res=1 ausgeführt wird. Alternativ könnte das resXL-Bit genau umgekehrt definiert sein, also, dass es als 1, also rezessiv, gesendet werden muss. In diesem Fall geht die empfangende Teilnehmerstation bei einem dominanten resXL-Bit in den Protokollausnahmezustand.

Nach dem resXL-Bit folgt in dem Rahmen 450 eine Sequenz ADS (Arbitration Data Switch), in welcher eine vorbestimmte Bitsequenz codiert wird. Diese Bitsequenz erlaubt eine einfache und sichere Umschaltung von der Bitrate der Arbitrationsphase 451 (Arbitrationsbitrate) zu der Bitrate der Datenphase 452 (Datenbitrate). Beispielsweise besteht die Bitsequenz der ADS-Sequenz aus einem AL1-Bit, das dominant, also 0, gesendet wird. Das AL1-Bit ist das letzte Bit der Arbitrationsphase 451. Innerhalb des AL1-Bits wird der Physical Layer in der Sende-/Empfangseinrichtung 12, 22, 32 umgeschaltet. Die zwei folgenden Bits DH1 und DL1 werden bereits mit der Datenbitrate gesendet. Somit sind die Bits DH1 und DL1 bei CAN XL zeitlich kurze Bits der Datenphase 452.

Nach der Sequenz ADS folgt in dem Rahmen 450 ein PT-Feld, das den Inhalt des Datenfeldes 455 kennzeichnet. Der Inhalt gibt an, welche Art von Information in dem Datenfeld 455 enthalten ist. Beispielsweise gibt das PT-Feld an, ob sich im Datenfeld 455 ein "Internet Protocol" (IP) Rahmen befinden, oder ein getunnelter Ethernet Rahmen oder sonstiges.

An das PT-Feld schließt sich ein DLC-Feld an, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 0 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann (2^11)-1 = 2047.

Nach dem DLC-Feld folgt in dem Rahmen 450 eine Kopfprüfsumme HCRC. Die Kopfprüfsumme HCRC ist eine Prüfsumme zur Absicherung des Kopfes (Headers) des Rahmens 450, das heißt aller Bits vom Beginn des Rahmens 450 mit dem SOF-Bit bis zum Beginn der Kopfprüfsumme HCRC, inklusive aller dynamischen und optional der fixed Stuff-Bits bis zum Beginn der Kopfprüfsumme HCRC. Die Länge der Kopfprüfsumme HCRC und damit des Prüfsummen-Polynoms gemäß der zyklischen Redundanzprüfung (CRC) ist entsprechend der gewünschten Hamming-Distanz zu wählen. Das von der Kopfprüfsumme HCRC abzusichernde Datenwort ist bei einem Datenlängencode (DLC) von 11 Bit länger als 27 Bit. Daher muss das Polynom der Kopfprüfsumme HCRC, um eine Hamming-Distanz von 6 zu erreichen, mindestens 13 Bit lang sein.

Nach der Kopfprüfsumme HCRC folgt in dem Rahmen 450 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben.

Nach dem Datenfeld 455 folgt in dem Rahmen 450 eine Rahmenprüfsumme FCRC. Die Rahmenprüfsumme FCRC besteht aus den Bits der Rahmenprüfsumme FCRC. Die Länge der Rahmenprüfsumme FCRC und damit des CRC Polynoms ist entsprechend der gewünschten Hamming-Distanz zu wählen. Die Rahmenprüfsumme FCRC sichert den gesamten Rahmen 450 ab. Alternativ ist optional nur das Datenfeld 455 mit der Rahmenprüfsumme FCRC abgesichert.

Nach der Rahmenprüfsumme FCRC folgt in dem Rahmen 450 die Sequenz DAS (Data Arbitration Switch), in welcher eine vorbestimmte Bitsequenz codiert wird. Diese Bitsequenz erlaubt eine einfache und sichere Umschaltung von der DatenBitrate der Datenphase 452 zu der Arbitrations-Bitrate der Arbitrationsphase 451.

Beispielsweise besteht die Bitsequenz der Sequenz DAS aus einem rezessiven Datenbit DH2, gefolgt von einem dominanten Arbitrationsbit DL2. Bei diesem Beispiel kann an der Flanke zwischen den zwei genannten Bits die Bitrate umgeschaltet werden. Üblicherweise hat das DAS-Feld drei Bits, also das DH2-Bit, das DL2-Bit und ein AH1-Bit. Von den Bits werden das erste und letzte Bit als rezessiv, also 1, gesendet und das mittlere Bit als dominant, also 0, gesendet.

Abweichend von dem vorangehenden Beispiel ist bei dem vorliegenden Ausführungsbeispiel in der Sequenz DAS ein Feld FCP enthalten, mit welchem die Teilnehmerstationen 10, 30, insbesondere ihre Formatprüfmodule 15, 35, in der Lage sind, in einem empfangenen Rahmen 450 einen Versatz des Bitstroms zu detektieren. Hierbei gilt, je länger das Bitmuster des FCP-Felds ist, desto größer oder stärker ist die Verschiebung, die in der empfangenden Teilnehmerstation 10, 30 detektiert werden kann. Das vorteilhafteste Bitmuster für die Verschiebungsdetektion enthält eine gerade Zahl von M Bits, wobei die ersten M/2 Bits eine 1 enthalten und die folgenden M/2 Bits eine 0. Bei dem Beispiel von Fig. 2 mit einem FCP-Feld mit 4 Bits werden die ersten beiden Bits als rezessiv, also 1, gesendet. Die beiden letzten Bits des FCP-Felds werden als dominant, also 0, gesendet. Somit weicht das FCP-Feld mit vier Bits gemäß Fig. 2, wegen der zusätzlichen Bits DH3, DL3, von den üblichen zwei Bits am Anfang des DAS-Felds ab. Jedoch kann die Flanke von rezessiv zu dominant in dem FCP-Feld von Fig. 2 die gleiche Funktion erfüllen wie in einem üblichen DAS-Feld, das die Bits DH3, DL3 nicht aufweist.

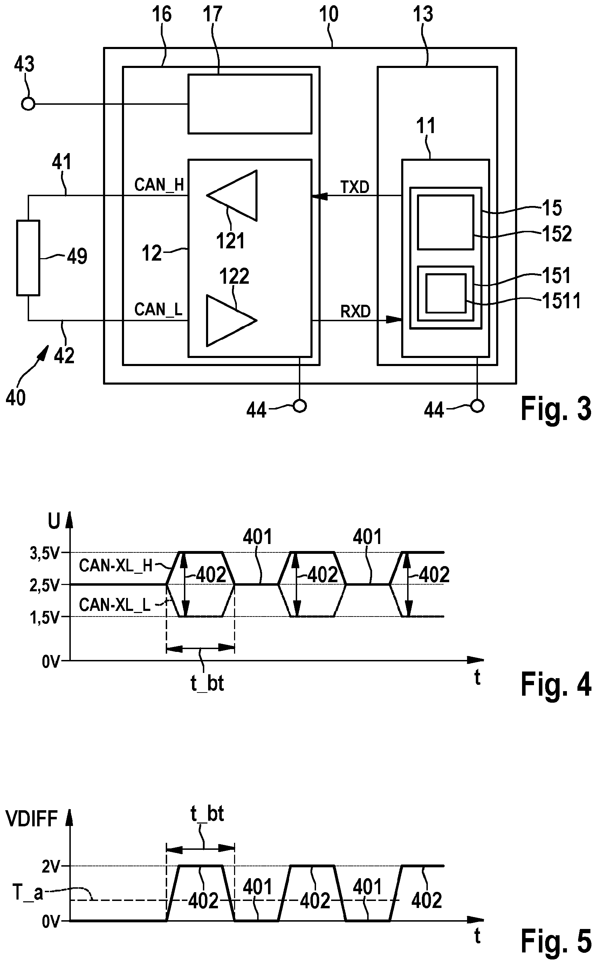

Ganz allgemein ist es möglich, dass in dem FCP-Feld die ersten M/2 Bits eine 0 enthalten und die folgenden M/2 Bits eine 1. Mit dem Feld FCP kann ein Versatz um M-1 erkannt werden. Dies ist nachfolgend in Bezug auf Fig. 3 noch genauer beschrieben.

Nach der Sequenz DAS folgt in dem Rahmen 450 das Bestätigungsfeld 457, das mit einem RP-Feld beginnt. In dem RP-Feld ist ein Synchronisationsmuster (Sync Pattern) vorgehalten, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstation 10, 30, die beispielsweise aufgrund einer falschen Kopfprüfsumme HCRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN XL im Datenfeld 455 keine Fehlerrahmen 47 (Error Flags) erlaubt.

Nach dem RP-Feld folgen in dem Bestätigungsfeld (ACK Field) 457 mehrere Bits zur Bestätigung oder Nichtbestätigung eines korrekten Empfangs des Rahmens 450. Bei dem Beispiel von Fig. 2 sind ein ACK-Bit, ein ACK-dlm-Bit, ein NACK-Bit und ein NACK-dlm-Bit vorgesehen. Das NACK-Bit und das NACK-dlm-Bit sind optionale Bits. Das ACK-Bit senden die empfangenden Teilnehmerstation 10, 30 als dominant, wenn sie den Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Bestätigungsfeld (ACK Field) 457 folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space), der in Fig. 2 nicht dargestellt ist. Dieser Zwischenrahmenabstand (IFS) ist ausgestaltet wie bei CAN FD entsprechend der ISO11898-1:2015.

Fig. 3 zeigt den grundlegenden Aufbau der Teilnehmerstation 10 mit der Kommunikationssteuereinrichtung 11, der Sende-/Empfangseinrichtung 12 und dem Formatprüfmodul 15, das Teil der Kommunikationssteuereinrichtung 11 ist. Die Teilnehmerstation 30 ist in ähnlicher Weise aufgebaut, wie in Fig. 3 gezeigt, jedoch ist das Formatprüfmodul 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Das Formatprüfmodul 15 hat einen Einfügeblock 151 und einen Auswerteblock 152, die nachfolgend noch genauer beschrieben sind.

Die Sende-/Empfangseinrichtung 12 hat zudem ein Sendemodul 121 und ein Empfangsmodul 122. Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, und mit dem Empfangsmodul 122 verbunden, das auch als Receiver bezeichnet wird, auch wenn die Verbindung in Fig. 3 zur Vereinfachung nicht gezeigt ist.

Im Betrieb des Bussystems 1 setzt das Sendemodul 121 ein Sendesignal TXD oder TxD der Kommunikationssteuereinrichtung 11 in entsprechende Signale CAN-XL_H und CAN-XL_L für die Busadern 41, 42 um und sendet diese Signale CAN-XL_H und CAN-XL_L an den Anschlüssen für CAN_H und CAN_L auf den Bus 40.

Das Empfangsmodul 122 bildet aus von Bus 40 empfangenen Signalen CAN-XL_H und CAN-XL_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 4 haben die Signale CAN-XL_H und CAN-XL_L zumindest in der Arbitrationsphase 451 die dominanten und rezessiven Buspegel 401, 402, wie von CAN bekannt. Auf dem Bus 40 bildet sich ein Differenzsignal VDIFF = CAN-XL_H - CAN-XL_L aus, das in Fig. 5 gezeigt ist. Die einzelnen Bits des Signals VDIFF mit der Bitzeit t_bt können mit einer Empfangsschelle von 0,7 V erkannt werden. In der Datenphase 452 werden die Bits der Signale CAN-XL_H und CAN-XL_L schneller, also mit einer kürzeren Bitzeit t_bt, gesendet als in der Arbitrationsphase 451. Somit unterscheiden sich die Signale CAN-XL_H und CAN-XL_L in der Datenphase 452 zumindest in deren schnelleren Bitrate von den herkömmlichen Signalen CAN_H und CAN_L.

Die Abfolge der Zustände 401, 402 für die Signale CAN-XL_H, CAN-XL_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Mit anderen Worten erzeugt das Sendemodul 121 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul 121, für die zeitlichen Verläufe der Signale CAN-XL_H, CAN-XL_L in einer zweiten Betriebsart, welche die Datenphase 452 umfasst, die Bits mit einer höheren Bitrate auf den Bus 40. Die CAN-XL_H und CAN-XL_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Das Formatprüfmodul 15 von Fig. 3, insbesondere dessen Einfügeblock 151, dient zum Einfügen des FCP-Felds in den Rahmen 450, wenn die Teilnehmerstation 10 als Sender des Rahmens 450 agiert. Bei dem Beispiel von Fig. 2 hat der Einfügeblock 151 nur ein einziges FCP-Feld in den Rahmen 450 eingefügt. Das FCP-Feld ist möglichst spät im Rahmen 450 platziert, damit auch Verschiebungen am Ende des Rahmens 450 detektierbar sind. Sehr vorteilhaft ist eine Platzierung nach der Rahmenprüfsumme FCRC, wie in Fig. 2 als Beispiel gezeigt, da dies die letzte mögliche Stelle ist.

Das Formatprüfmodul 15 von Fig. 3 ist bei dem vorliegenden Ausführungsbeispiel derart ausgestaltet, dass das FCP-Feld das DH2-Bit und das DL2-Bit des DAS-Felds ersetzt. Dazu muss das FCP-Feld als 1100 oder 111000 usw. gewählt werden, damit die Funktion von DH2/DL2 erhalten bleibt. Somit dient das FCP-Feld nicht nur dazu, eine sichere Formatprüfung zu ermöglichen, sondern auch als Synchronisationsflanke vor der Umschaltung von der Datenphase 452 in die Arbitrationsphase 451. Das FCP-Feld hat also zwei verschiedene Funktionen. Dadurch erzeugt das FCP-Feld möglichst wenig Überhang an Daten (Daten-Overhead).

Optional ist das Formatprüfmodul 15 von Fig. 3 ausgestaltet, das FCP-Feld alternativ oder zusätzlich in dem ADS-Feld zu integrieren. Der Einfügeblock 151 kann also mindestens ein FCP-Feld in den Rahmen 450 einfügen.

Der Auswerteblock 152 des Formatprüfmoduls 15 von Fig. 3 dient zum Prüfen des Formats des von dem Bus 40 empfangenen Bitstroms unter Verwendung des FCP-Felds.

Hat das FCP-Feld beispielsweise M = 4 Bits, so kann der Einfügeblock 151 das FCP-Feld als "1100" oder "0011" einfügen. Folglich wird das FCP-Feld als "1100" oder "0011" gesendet. Tastet die empfangende Teilnehmerstation 10 mit dem Auswerteblock 152 einen anderen Wert für das FCP-Feld ab, wertet der Auswerteblock 152 aus, dass eine Verschiebung des Bitstroms des Rahmens 450 vorliegt. Mit einer derartigen Bitfolge im FCP-Feld kann die empfangende Teilnehmerstation 10 mit dem Auswerteblock 152 eine Verschiebung des von dem Bus 40 empfangenen Bitstroms um M - 1 = 3 Bits nach links oder um M - 1 = 3 Bits nach rechts sicher erkennen. Dies ist in der nachfolgenden Tabelle veranschaulicht.

| Fall | Abtastergebnis bei empfangender Teilnehmerstation |
|---|---|
| Rechtsverschiebung um 3 Bits | 0xxx |
| Rechtsverschiebung um 2 Bits | 00xx |
| Rechtsverschiebung um 1 Bit | 100x |
| Keine Verschiebung | 1100 |
| Linksverschiebung um 1 Bit | x110 |
| Linksverschiebung um 2 Bits | xx11 |
| Linksverschiebung um 3 Bits | xxx1 |

In der Tabelle steht x für einen beliebigen Bitwert, also 0 oder 1. Gesendet wird das FCP-Feld als "1100", wie in der Mitte der Tabelle angegeben. Findet kein Flankenversatz und somit keine Verschiebung des Bitstroms statt, tastet die empfangende Teilnehmerstation das FCP-Feld auch als "1100" ab.

Über und unter dem gesendeten Feld "1100" sind in der Tabelle die Fälle dargestellt, in denen die empfangende Teilnehmerstation (Empfangsknoten) 10, die in diesem Beispiel kein Sender des Rahmens 450 ist, den Bitstrom aufgrund eines Fehlers versetzt abtastet. "Rechtsverschiebung um 3 Bits" bedeutet, dass die Sicht der empfangenden Teilnehmerstation (Empfangsknoten) um 3 Bit versetzt ist, und zwar in diesem Fall um 3 Bits zu spät dran ist. Dementsprechend tastet die empfangende Teilnehmerstation (Empfangsknoten) 10 das letzte Bit des gesendeten FCP-Felds als das erste Bit des empfangenen FCP-Felds ab. Die anderen drei Bits des empfangenen FCP-Feldes haben dann andere Werte, die hier mit ,x' bezeichnet sind.

"Linksverschiebung um 1 Bit" bedeutet, dass die Sicht der empfangenden Teilnehmerstation (Empfangsknoten) 10 um 1 Bit versetzt ist, und zwar in diesem Fall um 1 Bit zu früh dran ist. Dementsprechend tastet die empfangende Teilnehmerstation (Empfangsknoten) 10 die ersten 3 Bits des gesendeten FCP-Felds als die letzten Bits des empfangenen FCP-Felds ab.

Wie aus der Tabelle ersichtlich, ist der von der empfangenden Teilnehmerstation (Empfangsknoten) 10 abgetastete Wert des FCP-Felds unabhängig davon, welchen Wert die mit ,x` bezeichneten Bits haben, bei einer Verschiebung immer in mindestens einem Bit verschieden von dem erwarteten Wert des FCP-Felds. Somit kann die empfangende Teilnehmerstation (Empfangsknoten) 10, insbesondere ihr Formatprüfmodul 15 und genauer ihr Auswerteblock 152, die Verschiebung, also den Fehler im empfangenen Bitstrom, erkennen. Der Auswerteblock 152 gibt eine entsprechende Mitteilung an die Kommunikationssteuereinrichtung 11 aus. Damit kann der empfangene Rahmen 450 im Falle eines Fehlers verworfen werden. In Folge dessen kann die Kommunikationssteuereinrichtung 11 einen Fehlerrahmen 47 zum Bus 40 senden.

Gemäß einem anderen Beispiel für einen festen Wert des FCP-Felds des vorliegenden Ausführungsbeispiels hat das FCP-Feld 6 Bits, so dass M = 6 Bits gilt. Der Einfügeblock 151 fügt das FCP-Feld somit als "111000" oder "000111" ein. Folglich wird das FCP-Feld als "111000" oder "000111" gesendet. Tastet die empfangende Teilnehmerstation 10), die kein Sender des Rahmens ist, mit dem Auswerteblock 152 einen anderen Wert für das FCP-Feld ab, wertet der Auswerteblock 152 aus, dass eine Verschiebung des Bitstroms vorliegt. Mit einer derartigen Bitfolge im FCP-Feld kann die empfangende Teilnehmerstation 10 mit dem Auswerteblock 152 eine Verschiebung des von dem Bus 40 empfangenen Bitstroms um M - 1 = 5 Bits nach links oder rechts sicher erkennen.

Selbstverständlich sind andere feste Längen des FCP-Felds und damit andere feste Werte des FCP-Felds denkbar.

Gemäß einer Modifikation des vorliegenden Ausführungsbeispiels hat das FCP-Feld einen variablen Inhalt.

Als ein Beispiel für einen solchen variablen Inhalt des FCP-Felds kann die Anzahl der Fixed Stuff-Bits im FCP-Feld übertragen werden. Die Anzahl der Fixed Stuff-Bits hängt von der Länge des Rahmens 450 ab. Falls die Breite des FCP-Felds, also die Anzahl der Bits, die im Rahmen 450 für das FCP-Feld vorgesehen sind, nicht ausreicht, um die gesamte Anzahl der Fixed Stuff-Bits zu übertragen, können nur die niederwertigeren Bits eines Fixed Stuff-Bits-Zählers gesendet werden.

Als ein anderes Beispiel für einen solchen variablen Inhalt des FCP-Felds kann die Anzahl der von einer sendenden Teilnehmerstation (Sendeknoten) gesendeten Rahmen 450 im FCP-Feld übertragen werden. Die Anzahl der gesendeten Rahmen 450 von einem Sendeknoten kann auch als Frame Counter bezeichnet werden.

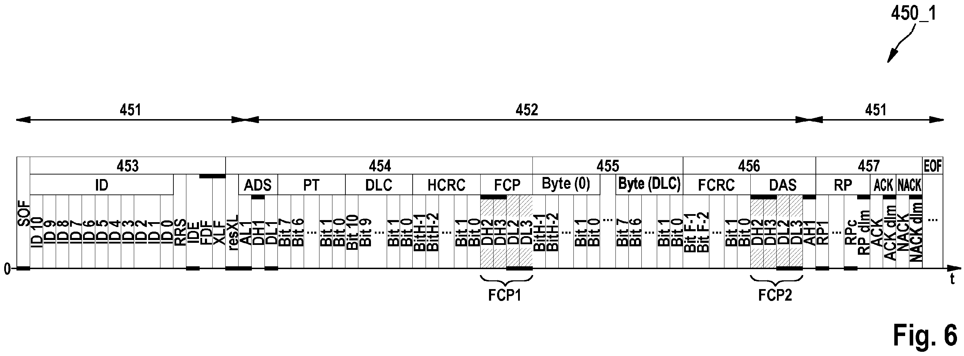

Fig. 6 zeigt einen Rahmen 450_1 gemäß einem zweiten Ausführungsbeispiel, bei welchem CAN XL und CAN FD kompatibel sind. Bei diesem Ausführungsbeispiel unterscheidet sich der Rahmen 450_1 und damit das CAN XL Rahmenformat von dem Rahmen 450 von Fig. 2, wie nachfolgend beschrieben. Hierbei sind nachfolgend nur die Unterschiede zu dem Rahmen 450 von Fig. 2 beschrieben. Im Übrigen sind die Rahmen 450, 450_1 der beiden Ausführungsbeispiele gleich.

In dem Rahmen 450_1 sind mindestens zwei FCP-Felder vorhanden. Bei dem Beispiel von Fig. 6 ist in dem Rahmen 450_1 nach der Kopfprüfsumme HCRC ein FCP-Feld FCP1 und ist nach der Rahmenprüfsumme FCRC ein FCP-Feld FCP2 eingefügt. Auch bei dem Rahmen 450_1 haben die FCP-Felder FCP1, FCP2 als Beispiel eine Länge M = 4 Bit. Selbstverständlich kann eine andere Länge für das FCP-Feld gewählt werden. Insbesondere ist es möglich, dass die Länge, also die Anzahl der Bits der FCP-Felder FCP1, FCP2 unterschiedlich ist.

Ganz allgemein kann der Einfügeblock 151 ausgestaltet sein, ein FCP-Feld an beliebiger Stelle im Rahmen 450_1 einzufügen. Der Auswerteblock 152 ist ausgestaltet, das FCP-Feld an den entsprechenden Einfügestellen zu suchen und somit den empfangenen Rahmen 450_1 auszuwerten.

Insbesondere ist der Einfügeblock 151 ausgestaltet, ein FCP-Feld mehrfach in den zu sendenden Rahmen 450_1 einzufügen. Beispielsweise kann ein FCP-Feld mit immer demselben Inhalt immer nach einer vorbestimmten Anzahl von Daten, insbesondere immer nach 128 Byte Daten oder einem beliebigen anderen Wert, eingefügt werden. Selbstverständlich sind andere Beispiele denkbar.

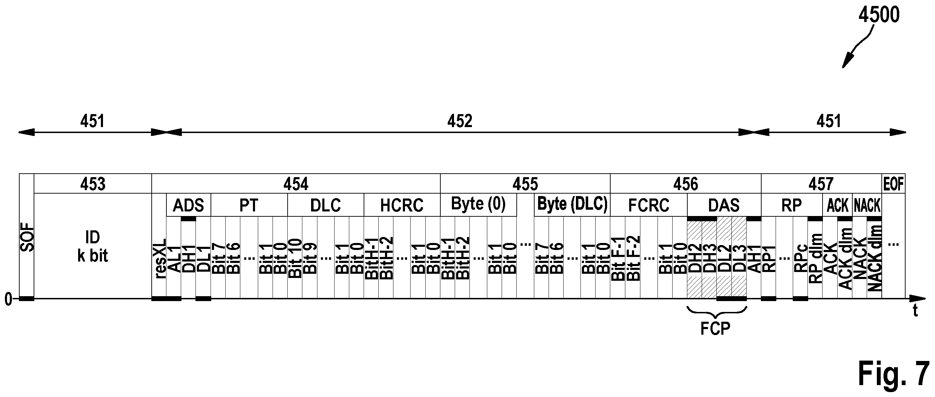

Fig. 7 zeigt einen Rahmen 4500 gemäß einem dritten Ausführungsbeispiel, bei welchem die Rahmen-Formate von CAN XL und CAN FD nicht kompatibel sind. Bei diesem Ausführungsbeispiel unterscheidet sich der Rahmen 4500 und damit das CAN XL Rahmenformat von dem Rahmen 450 von Fig. 2, wie nachfolgend beschrieben. Hierbei sind nur die Unterschiede zu dem Rahmen 450 von Fig. 2 beschrieben. Im Übrigen sind die Rahmen 450, 4500 der beiden Ausführungsbeispiele gleich.

Allgemein wird bei der Erzeugung des Rahmens 4500 gemäß dem vorliegenden Ausführungsbeispiel nur die feste Stuffing-Regel verwendet, so dass nach einer festen Zahl von Bits ein fixed Stuff-Bit einzufügen ist. Alternativ können statt nur einem Stuff-Bit auch zwei oder mehr Bits als fixed Stuff-Bits eingefügt werden. Dies führt bei bekanntem Wert des Datenlängecodes (DLC) zu einer konstanten Rahmenlänge bzw. einer konstanten Länge des Rahmens 4500. Dies verhindert verschiedene Probleme, die durch dynamische Stuff-Bits hervorgerufen werden.

In dem Rahmen 4500 gemäß dem vorliegenden Ausführungsbeispiel ist der Identifizierer (ID) nicht mehr auf eine Anzahl von 11 Bits oder 29 Bits wie bei CAN FD beschränkt. Die Anzahl k der Bits des Identifizierers (ID) kann frei gewählt werden. Die Anzahl k ist jedoch alternativ auf einen festen Wert festlegbar. Für eine hohe Nettodatenrate ist eine ID mit k = 8 Bits sinnvoll. Diese reicht aus, um jeder Teilnehmerstation 10, 20, 30 des Bussystems 1 ausreichend viele Bus-Zugriffs-Prioritäten zu geben. Selbstverständlich ist jedoch ein anderer Wer für k wählbar, je nach Bedarf und Anzahl von verschiedenen Prioritäten in dem Bussystem 1.

Die Bits RRS, IDE, FDF, XLF des Rahmens 450 von Fig. 2 sind bei dem Rahmen 4500 nicht mehr notwendig und werden wegelassen. Dies spart 4 Bits ein, so dass der Rahmenüberhang reduziert wird. Dadurch wird die Nettodatenrate im Bussystem 1 erhöht.

Das Endefeld (EOF) hat in dem Rahmen 4500 nur noch eine Anzahl von fünf Bits, wenn das NACK-Bit dominant ist. Ist das NACK-Bit dagegen rezessiv, hat das Endefeld (EOF) eine Anzahl von drei Bits. Dies sorgt dafür, dass am Ende des Rahmens 4500 eine Anzahl von sechs rezessiven Bits gesendet wird. Diese Zahl von rezessiven Bits kann in einem gültigen Rahmen 4500 an keiner anderen Stelle vorkommen, wenn in der Arbitrationsphase 451 nach fünf gleichen Bits ein fixed Stuff-Bit eingefügt wird. Es könnten alternativ mehr als sechs Bits sein. Insbesondere muss die Zahl der EOF Bits an die Zahl der Bits, nach denen ein fixed Stuff-Bit eingefügt wird, angepasst werden.

Der Zwischenrahmenabstand (IFS) benötigt in dem Rahmen 4500 keine Mindestlänge. Insbesondere kann der Zwischenrahmenabstand (IFS) die Länge 0 haben. In einem solchen Fall werden zwei Rahmen 4500 nahtlos nacheinander gesendet. Jedoch ist ein Zwischenrahmenabstand (IFS) mit einer Anzahl von beispielsweise 1 Bit auch sinnvoll, um die Robustheit des Bussystems 1 im Vergleich zu dem zuvor genannten Fall zu erhöhen. Durch die nun sieben rezessiven Bits zwischen zwei Rahmen 4500 kann sich eine neue Teilnehmerstation am Bus 40 zuverlässiger synchronisieren.

Gemäß einem vierten Ausführungsbeispiel wird das FCP-Feld als Fixed Stuff-Bit verwendet. Anders ausgedrückt, anstatt eines fixed Stuff-Bits ist der Einfügeblock 151 ausgestaltet, in den Rahmen 450 ein FCP-Feld einzufügen. In einem solchen Fall ist ein kurzes FCP-Feld ausreichend, das beispielsweise die Länge M = 2 Bit hat, da sich zwischen zwei Stuff-Bits nur eine kleine Verschiebung ergeben kann.

Somit hat auch bei dem vorliegenden Ausführungsbeispiel das FCP-Feld zwei verschiedene Funktionen, nämlich Stuff-Bit und Formatprüfung.

Ein FCP-Feld mit einer Länge M = 2 Bit verursacht nur einen sehr geringen Überhang an Daten (Daten-Overhead) oder sogar gar keinen Überhang an Daten (Daten-Overhead). Dies ist nachfolgend genauer erläutert.

Bei dem vorliegenden Ausführungsbeispiel wird immer ein FCP-Feld mit konstantem Inhalt anstatt eines fixed Stuff-Bits verwendet. Das Bitmuster im FCP-Feld wird von dem Einfügeblock 151 derart gewählt, dass das FCP-Feld eine Synchronisationsflanke enthält. Synchronisiert CAN XL auf fallende Flanken, wäre für das FCP-Feld der Wert "10" vorteilhaft. Falls CAN XL auf die steigende Flanke synchronisieren würde, wäre für das FCP-Feld der Wert "01" vorteilhaft.

Bei fixed Stuff-Bits ist im schlimmsten Fall für die Synchronisation nur nach jedem zweiten Stuff-Bit eine fallende Flanke vorhanden. Da bei einem FCP-Feld immer synchronisiert werden kann, kann also der Abstand zwischen zwei FCP-Feldern doppelt so groß sein wie der Abstand zwischen zwei fixed Stuff-Bits, ohne die Synchronisation einer empfangenden Teilnehmerstation 10, 30 (Empfangsknoten) zu verschlechtern.

Da das FCP Feld zwar 2 Bits hat, aber nur halb so oft vorkommt wie ein fixed Stuff-Bit, ist der Überhang an Daten (Daten-Overhead) durch das FCP-Feld identisch zu dem Überhang an Daten (Daten-Overhead), der durch fixed Stuff-Bits erzeugt wird.

Der große Vorteil des FCP-Feldes liegt darin, dass sein Inhalt konstant ist. Dadurch sind Verschiebungen im Datenstrom sicher feststellbar. Im beschriebenen Beispiel mit M = 2 Bit lassen sich Verschiebungen in der empfangenden Teilnehmerstation 10, 30 (Empfangsknoten) um 1 Bit sicher erkennen. Dadurch, dass das FPC-Feld so oft im Rahmen vorkommt, lassen sich Verschiebungen sofort und effektiv erkennen. Dadurch kann ein Fehler im empfangenen Rahmen 450 sehr schnell erkannt werden und das Senden des Rahmens 450 schnell abgebrochen werden. Dies trägt mit zu einer schnelleren Übertragung von Nutzdaten im Bussystem 1 bei.

Gemäß einer Modifikation des vorliegenden Ausführungsbeispiels kann sich die empfangende Teilnehmerstation 10, 30 (CAN XL Empfangsknoten) eine Re-Synchronisation nur an den Flanken in dem FCP-Feld durchführen, anstatt sich an jeder fallenden Flanke zu re-synchronisieren. Dadurch, dass damit die Re-Synchronisation auf die notwendigen Flanken eingeschränkt wird, ist die Gefahr reduziert, dass sich die empfangende Teilnehmerstation 10, 30 (CAN XL Empfangsknoten) auf eine gestörte Flanke synchronisiert und damit einen Fehler einfügt.

Der große Vorteil dieser Modifikation des vorliegenden Ausführungsbeispiels ist, dass die Zahl der Re-Synchronisationsfehler abnimmt, weil jetzt explizit die Flanken im FCP-Feld gestört sein müssen, um eine Fehlsynchronisation zu erreichen.

Gemäß einem fünften Ausführungsbeispiel wird das FCP-Feld wieder als Fixed Stuff-Bit verwendet, wie bei dem vorangehenden Ausführungsbeispiel. Jedoch wird bei dem vorliegenden Ausführungsbeispiel immer ein FCP-Feld mit variablem Inhalt anstatt eines Fixed Stuff-Bits verwendet. Somit hat auch bei dem vorliegenden Ausführungsbeispiel das FCP-Feld zwei verschiedene Funktionen, nämlich Stuff-Bit und Formatprüfung.

Hierbei wählt der Einfügeblock 151 immer ein FCP-Feld passend zum Wert des Stuff-Bits. Da ein Stuff-Bit zwei Werte haben kann, nämlich 0 oder 1, wird von zwei unterschiedlichen FCP-Feldern ausgegangen. Somit kann der Einfügeblock 151 entweder ein FCP-Feld FCP_A mit dem Wert "01" einfügen oder ein FCP-Feld FCP_B mit dem Wert "10" einfügen.

Daher fügt der Einfügeblock 151 je nach dem Wert des potentiellen Stuff-Bits ein FCP-Feld ein. Beispielsweise würde das FCP-Feld FCP_A eingefügt und gesendet, wenn das Stuff-Bit 0 ist. Ist das Stuff-Bit 1, würde das FCP-Feld FCP_B eingefügt und gesendet.

Das Prinzip des variablen Inhalts des FCP-Felds ist für den Einfügeblock 151 selbstverständlich auf die Erzeugung anderer FCP-Felder anwendbar.

Gemäß einem sechsten Ausführungsbeispiel wird das AH1-Bit als zusätzliches oder einziges FCP-Feld verwendet. Dies ist möglich, wenn das AH1-Bit gemäß dem aktuellen Stand der Standardisierung von CAN XL nicht anderweitig ausgewertet wird. Derzeit dient das AH1-Bit lediglich dazu, in der Sende-/Empfangseinrichtung 12, 32 für eine Umschaltung des Physical Layers von der Datenphase 452 in die Arbitrationsphase 451 Zeit zu haben.

In einem solchen Fall kann der Empfangsknoten die Umschaltung des Physical Layers an die Sende-/Empfangseinrichtung 12, 32 beispielsweise per TXD Leitung signalisieren. Dies ist möglich, da der Empfangsknoten seine TXD-Leitung nicht zum Senden verwendet. Im Sendeknoten geht das nicht, da der Sendeknoten seine TXD-Leitung zum Senden verwendet.

Folglich kann der Empfangsknoten bzw. die Teilnehmerstation 10 als empfangende Teilnehmerstation mit ihrem Auswerteblock 152 das AH1-Bit auswerten, das heißt abtasten. Da das AH1-Bit einen konstanten Wert hat, dient es auch zum Prüfen des Formats des empfangenen Rahmens (Format Check). Das AH1-Bit hilft zu erkennen, ob der Empfangsknoten den Bitstrom versetzt abtastet. Damit kann die Prüfung des Formats des empfangenen Rahmens (Format Check) sicher durchgeführt werden oder bei zusätzlichen FCP-Feldern weiter gestärkt werden.

Die Auswertung des AH1-Bits hat den Vorteil, dass die Prüfung des Formats (Format Check) des empfangenen Rahmens 450 kein Überhang an Daten (Daten-Overhead) verursacht. Somit hat auch bei dem vorliegenden Ausführungsbeispiel das FCP-Feld zwei verschiedene Funktionen, nämlich die Funktion des bisherigen AH1-Bits und Formatprüfung.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Sende-/Empfangseinrichtung (12; 32) zum Senden eines von der Kommunikationssteuereinrichtung (11; 31) erzeugten Sendesignals (TXD) auf einen Bus (40) des Bussystems (1), so dass sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheiden kann von einer Bitzeit (t_bt) eines in der zweiten Kommunikationsphase (452) gesendeten Signals,
**dadurch gekennzeichnet, dass**
die Kommunikationssteuereinrichtung (11; 31) ausgestaltet ist, das Sendesignal (TXD) gemäß einem Rahmen (450; 450_1; 4500) zu erzeugen und in dem Rahmen (450; 450_1; 4500) mindestens ein Feld (FCP; FCP_1; FCP_2) einzufügen, das zum Prüfen ausgestaltet ist, ob der Bitstrom des Rahmens (450; 450_1; 4500) in einer Teilnehmerstation (10; 20; 30) des Bussystems (1), die den Rahmen (450; 450_1; 4500) empfängt, jedoch kein Sender des Rahmens (450; 450_1; 4500) ist, um mindestens ein Bit im Vergleich zu dem erwarteten Rahmen (450; 450_1; 4500) versetzt ist, und
wobei die Kommunikationssteuereinrichtung (11; 31) in dem Fall, dass die Teilnehmerstation (10; 30) kein Sender des Rahmens (450; 450_1; 4500) ist, ausgestaltet ist, das mindestens eine Feld (FCP; FCP_1; FCP_2) zum Prüfen zu verwenden, ob der Bitstrom des empfangenen Rahmens um mindestens ein Bit im Vergleich zu dem erwarteten Rahmen (450; 450_1; 4500) versetzt ist.

2. Teilnehmerstation (10; 30) nach Anspruch 1, wobei die Kommunikationssteuereinrichtung (11; 31) ausgestaltet ist, das mindestens eine Feld (FCP; FCP_2) nach einem Datenfeld (455) in dem Rahmen (450; 450_1; 4500) einzufügen, insbesondere das mindestens eine Feld (FCP; FCP_2) in dem Rahmen (450; 450_1; 4500) nach einer Rahmenprüfsumme (FCRC) einzufügen, die über alle Bits in dem Rahmen (450; 450_1; 4500) gebildet wurde.

3. Teilnehmerstation (10; 30) nach Anspruch 1 oder 2, wobei die Kommunikationssteuereinrichtung (11; 31) ausgestaltet ist, das mindestens eine Feld (FCP_1) vor einem Datenfeld (455) einzufügen, in dem Nutzdaten des Rahmens (450; 450_1; 4500) eingefügt sind.

4. Teilnehmerstation (10; 30) nach einem der vorangehenden Ansprüche, wobei die Kommunikationssteuereinrichtung (11; 31) ausgestaltet ist, das mindestens eine Feld (FCP_1) derart auszugestalten und/oder anzuordnen, dass der Inhalt des mindestens einen Felds (FCP_1) in einer empfangenden Teilnehmerstation (10; 30) nicht nur für die Funktion der Prüfung des Versatzes des Bitstroms heranzuziehen ist, sondern auch für eine davon verschiedene Funktion.

5. Teilnehmerstation (10; 30) nach einem der vorangehenden Ansprüche, wobei die Kommunikationssteuereinrichtung (11; 31) ausgestaltet ist, in den Rahmen (450; 450_1; 4500) immer nach einer festen Zahl von Bits eines der Felder (FCP; FCP_1; FCP_2) einzufügen.

6. Teilnehmerstation (10; 30) nach einem der vorangehenden Ansprüche,
wobei die Kommunikationssteuereinrichtung (11; 31) ausgestaltet ist, das mindestens eine Feld (FCP; FCP_1; FCP_2) als fixed Stuff-Bit in dem Rahmen (450; 450_1; 4500) einzufügen, und
wobei die Kommunikationssteuereinrichtung (11; 31) ausgestaltet ist, alle fixed Stuff-Bits in den Rahmen (450; 450_1; 4500) gemäß einer festen Bit-Stuffing-Regel einzufügen, gemäß welcher nach einer festen Zahl von Bits ein fixed Stuff-Bit einzufügen ist.

7. Teilnehmerstation (10; 30) nach Anspruch 6, wobei die Kommunikationssteuereinrichtung (11; 31) ausgestaltet ist, den Wert des Felds (FCP; FCP_1; FCP_2) abhängig davon zu wählen, welcher Wert für das Stuff-Bit zu wählen wäre, damit in dem Rahmen (450; 450_1; 4500) nach fünf gleichen Bits in Folge ein inverses Stuff-Bit eingefügt wird.

8. Teilnehmerstation (10; 30) nach einem Ansprüche 1 bis 6, wobei die Kommunikationssteuereinrichtung (11; 31) ausgestaltet ist, für alle der Felder (FCP; FCP_1; FCP_2) in dem Rahmen (450; 450_1; 4500) denselben Wert zu verwenden.

9. Teilnehmerstation (10; 30) nach Anspruch 8,
wobei die Kommunikationssteuereinrichtung (11; 31) ausgestaltet ist, für das mindestens eine Feld (FCP; FCP_1; FCP_2) eine gerade Zahl von M Bits zu verwenden,
wobei die erste Hälfte der M Bits jeweils denselben ersten Wert haben, und
wobei die zweite Hälfte der M Bits jeweils denselben zweiten Wert haben, der invers zu dem ersten Wert ist.

10. Teilnehmerstation (10; 30) nach Anspruch 8, wobei die Kommunikationssteuereinrichtung (11; 31) ausgestaltet ist, in dem mindestens einen Feld (FCP; FCP_1; FCP_2) mindestens die niederwertigsten Bits der Anzahl der in Rahmen (450; 450_1; 4500) eingefügten fixed Stuff-Bits einzufügen.

11. Teilnehmerstation (10; 30) nach Anspruch 8, wobei die Kommunikationssteuereinrichtung (11; 31) ausgestaltet ist, in dem mindestens einen Feld (FCP; FCP_1; FCP_2) mindestens die niederwertigsten Bits der Anzahl von Rahmen (450; 450_1; 4500) einzufügen, die von der Kommunikationssteuereinrichtung (11; 31) bereits auf den Bus (40) gesendet wurden.

12. Teilnehmerstation (10; 30) nach einem der vorangehenden Ansprüche,
wobei die Kommunikationssteuereinrichtung (11; 31) ausgestaltet ist, nach einem Umschalten der zweiten Kommunikationsphase (452) in die erste Kommunikationsphase (451) ein Bit (AH1) vorzusehen, während welchem die Sende-/Empfangseinrichtung (12; 32) Zeit zum Umschalten in die zweite Kommunikationsphase (452) hat, und
wobei die Kommunikationssteuereinrichtung (11; 31) ausgestaltet ist, in dem Fall, in welchem die Teilnehmerstation (10; 20; 30) des Bussystems (1), den Rahmen (450; 450_1; 4500) empfängt, jedoch kein Sender des Rahmens (450; 450_1; 4500) ist, das Bit (AH1) zum Prüfen zu verwenden, ob der Bitstrom des empfangenen Rahmens (450; 450_1; 4500) um mindestens ein Bit im Vergleich zu dem erwarteten Rahmen (450; 450_1; 4500) versetzt ist.

13. Teilnehmerstation (10; 30) nach einem der vorangehenden Ansprüche,
wobei der für die Nachricht (45) gebildete Rahmen (450; 450_1) kompatibel zu CAN FD aufgebaut ist, und
wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach einem der vorangehenden Ansprüche ist.

15. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) und eine Sende-/Empfangseinrichtung (12; 32) aufweist, wobei das Verfahren die Schritte aufweist,
Steuern, mit der Kommunikationssteuereinrichtung (11; 31) einer Kommunikation der Teilnehmerstation (10; 30) mit mindestens einer anderen Teilnehmerstation (10; 20; 30) des Bussystems (1), und
Senden, mit der Sende-/Empfangseinrichtung (12; 32), eines von der Kommunikationssteuereinrichtung (11; 31) erzeugten Sendesignals (TXD) auf einen Bus (40) des Bussystems (1), so dass sich für eine Nachricht (45), die zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheiden kann von einer Bitzeit (t_bt) eines in der zweiten Kommunikationsphase (452) gesendeten Signals,
**dadurch gekennzeichnet, dass**
die Kommunikationssteuereinrichtung (11; 31) das Sendesignal (TXD) gemäß einem Rahmen (450; 450_1; 4500) erzeugt und in den Rahmen (450; 450_1; 4500) mindestens ein Feld (FCP; FCP_1; FCP_2) einfügt, das zum Prüfen ausgestaltet ist, ob der Bitstrom des Rahmens (450; 450_1; 4500) in einer Teilnehmerstation (10; 20; 30) des Bussystems (1), die den Rahmen (450; 450_1; 4500) empfängt, jedoch kein Sender des Rahmens (450; 450_1; 4500) ist, um mindestens ein Bit im Vergleich zu dem erwarteten Rahmen (450; 450_1; 4500) versetzt ist, so dass eine Kommunikationssteuereinrichtung (11; 31) des Bussystems (1) in dem Fall, dass die Teilnehmerstation (10; 30) kein Sender des Rahmens (450; 450_1; 4500) ist, das mindestens eine Feld (FCP; FCP_1; FCP_2) zum Prüfen verwenden kann, ob der Bitstrom des empfangenen Rahmens um mindestens ein Bit im Vergleich zu dem erwarteten Rahmen (450; 450_1; 4500) versetzt ist.

## Claims

1. Subscriber station (10; 30) for a serial bus system (1), having
a communication control device (11; 31) for controlling communication between the subscriber station (10; 30) and at least one other subscriber station (10; 20; 30) of the bus system (1), and
a transmitting/receiving device (12; 32) for transmitting a transmission signal (TXD) generated by the communication control device (11; 31) onto a bus (40) of the bus system (1), with the result that, for a message (45) exchanged between subscriber stations (10, 20, 30) of the bus system (1), the bit time (t_bt) of a signal transmitted onto the bus (40) in the first communication phase (451) can differ from a bit time (t_bt) of a signal transmitted in the second communication phase (452),
**characterized in that** the communication control device (11; 31) is configured to generate the transmission signal (TXD) according to a frame (450; 450_1; 4500) and to insert in the frame (450; 450_1; 4500) at least one field (FCP; FCP_1; FCP_2) which is configured for checking whether the bit stream of the frame (450; 450_1; 4500) is offset by at least one bit compared with the expected frame (450; 450_1; 4500) in a subscriber station (10; 20; 30) of the bus system (1) which receives the frame (450; 450_1; 4500) but is not a transmitter of the frame (450; 450_1; 4500), and
wherein the communication control device (11; 31) in the case where the subscriber station (10; 30) is not a transmitter of the frame (450; 450_1; 4500) is configured to use the at least one field (FCP; FCP_1; FCP_2) for checking whether the bit stream of the received frame is offset by at least one bit compared with the expected frame (450; 450_1; 4500).

2. Subscriber station (10; 30) according to Claim 1, wherein the communication control device (11; 31) is configured to insert the at least one field (FCP; FCP_2) after a data field (455) in the frame (450; 450_1; 4500), in particular to insert the at least one field (FCP; FCP_2) in the frame (450; 450_1; 4500) after a frame checksum (FCRC) which has been formed over all bits in the frame (450; 450_1; 4500).

3. Subscriber station (10; 30) according to Claim 1 or 2, wherein the communication control device (11; 31) is configured to insert the at least one field (FCP _1) before a data field (455) in which payload data of the frame (450; 450_1; 4500) are inserted.

4. Subscriber station (10; 30) according to any of the preceding claims, wherein the communication control device (11; 31) is configured to configure and/or arrange the at least one field (FCP_1) in such a way that the content of the at least one field (FCP_1) is to be used in a receiving subscriber station (10; 30) not only for the function of checking the offset of the bit stream, but also for a function differing therefrom.

5. Subscriber station (10; 30) according to any of the preceding claims, wherein the communication control device (11; 31) is configured to insert one of the fields (FCP; FCP_1; FCP_2) into the frame (450; 450_1; 4500) always after a fixed number of bits.

6. Subscriber station (10; 30) according to any of the preceding claims,
wherein the communication control device (11; 31) is configured to insert the at least one field (FCP; FCP_1; FCP_2) as a fixed stuff bit in the frame (450; 450_1; 4500), and
wherein the communication control device (11; 31) is configured to insert all fixed stuff bits into the frame (450; 450_1; 4500) according to a fixed bit stuffing rule according to which a fixed stuff bit is to be inserted after a fixed number of bits.

7. Subscriber station (10; 30) according to Claim 6, wherein the communication control device (11; 31) is configured to choose the value of the field (FCP; FCP_1; FCP_2) depending on the value that would have to be chosen for the stuff bit so that an inverse stuff bit is inserted in the frame (450; 450_1; 4500) after five identical bits in succession.

8. Subscriber station (10; 30) according to any of Claims 1 to 6, wherein the communication control device (11; 31) is configured to use the same value for all of the fields (FCP; FCP_1; FCP_2) in the frame (450; 450_1; 4500).

9. Subscriber station (10; 30) according to Claim 8,
wherein the communication control device (11; 31) is configured to use an even number of M bits for the at least one field (FCP; FCP_1; FCP_2),
wherein the first half of the M bits each have the same first value, and
wherein the second half of the M bits each have the same second value, which is inverse with respect to the first value.

10. Subscriber station (10; 30) according to Claim 8, wherein the communication control device (11; 31) is configured to insert in the at least one field (FCP; FCP_1; FCP_2) at least the least significant bits of the number of fixed stuff bits inserted in the frame (450; 450_1; 4500).

11. Subscriber station (10; 30) according to Claim 8, wherein the communication control device (11; 31) is configured to insert in the at least one field (FCP; FCP _1; FCP _1) at least the least significant bits of the number of frames (450; 450_1; 4500) which have already been transmitted onto the bus (40) by the communication control device (11; 31).

12. Subscriber station (10; 30) according to any of the preceding claims,
wherein the communication control device (11; 31) is configured, after a switching of the second communication phase (452) to the first communication phase (451), to provide a bit (AH1) during which the transmitting/receiving device (12; 32) has time for the switching to the second communication phase (452), and
wherein the communication control device (11; 31) is configured, in the case where the subscriber station (10; 20; 30) of the bus system (1) receives the frame (450; 450_1; 4500) but is not a transmitter of the frame (450; 450_1; 4500), to use the bit (AH1) for checking whether the bit stream of the received frame (450; 450_1; 4500) is offset by at least one bit compared with the expected frame (450; 450_1; 4500).

13. Subscriber station (10; 30) according to any of the preceding claims,
wherein the frame (450; 450_1) formed for the message (45) is designed as compatible with CAN FD, and
wherein negotiation takes place in the first communication phase (451) in order to determine which of the subscriber stations (10, 20, 30) of the bus system (1) receives at least temporarily exclusive, collision-free access to the bus (40) in the subsequent, second communication phase (452).

14. Bus system (1), having
a bus (40), and
at least two subscriber stations (10; 20; 30) which are connected to one another via the bus (40) in such a way that they can communicate serially with one another and at least one subscriber station (10; 30) of which is a subscriber station (10; 30) according to any of the preceding claims.

15. Method for communicating in a serial bus system (1), wherein the method is carried out using a subscriber station (10; 30) of the bus system (1), which subscriber station has a communication control device (11; 31) and a transmitting/receiving device (12; 32), wherein the method has the steps of
controlling, using the communication control device (11; 31), communication between the subscriber station (10; 30) and at least one other subscriber station (10; 20; 30) of the bus system (1), and
transmitting, using the transmitting/receiving device (12; 32), a transmission signal (TXD) generated by the communication control device (11; 31) onto a bus (40) of the bus system (1), with the result that, for a message (45) exchanged between subscriber stations (10, 20, 30) of the bus system (1), the bit time (t_bt) of a signal transmitted onto the bus (40) in the first communication phase (451) can differ from a bit time (t_bt) of a signal transmitted in the second communication phase (452),
**characterized in that** the communication control device (11; 31) generates the transmission signal (TXD) according to a frame (450; 450_1; 4500) and inserts into the frame (450; 450_1; 4500) at least one field (FCP; FCP_1; FCP_2) which is configured for checking whether the bit stream of the frame (450; 450_1; 4500) is offset by at least one bit compared with the expected frame (450; 450_1; 4500) in a subscriber station (10; 20; 30) of the bus system (1) which receives the frame (450; 450_1; 4500) but is not a transmitter of the frame (450; 450_1; 4500), with the result that a communication control device (11; 31) of the bus system (1) in the case where the subscriber station (10; 30) is not a transmitter of the frame (450; 450_1; 4500) can use the at least one field (FCP; FCP_1; FCP_2) for checking whether the bit stream of the received frame is offset by at least one bit compared with the expected frame (450; 450_1; 4500).

## Revendications

1. Station d'abonné (10 ; 30) pour un système de bus série (1), comprenant
un dispositif de commande de communication (11 ; 31) destiné à commander une communication de la station d'abonné (10 ; 30) avec au moins une autre station d'abonné (10 ; 20 ; 30) du système de bus (1), et
un dispositif d'émission/réception (12 ; 32) destiné à émettre un signal d'émission (TXD) généré par le dispositif de commande de communication (11 ; 31) sur un bus (40) du système de bus (1), de sorte que pour un message (45) qui est échangé entre les stations d'abonné (10, 20, 30) du système de bus (1), le temps de bit (t_bt) d'un signal émis sur le bus (40) dans la première phase de communication (451) peut être différent d'un temps de bit (t_bt) d'un signal émis dans la deuxième phase de communication (452),
**caractérisé en ce que** le dispositif de commande de communication (11 ; 31) est conçu pour générer le signal d'émission (TXD) selon une trame (450 ; 450_1 ; 4500) et pour insérer dans la trame (450 ; 450_1 ; 4500) au moins un champ (FCP ; FCP_1 ; FCP_2), lequel est conçu pour vérifier si le flux binaire de la trame (450 ; 450_1 ; 4500) dans une station d'abonné (10 ; 20 ; 30) du système de bus (1), laquelle reçoit la trame (450 ; 450_1 ; 4500) mais n'est pas un émetteur de la trame (450 ; 450_1 ; 4500), est décalé d'au moins un bit par rapport à la trame (450 ; 450_1 ; 4500) attendue, et
dans le cas où la station d'abonné (10 ; 30) n'est pas un émetteur de la trame (450 ; 450_1 ; 4500), le dispositif de commande de communication (11 ; 31) étant conçu pour utiliser l'au moins un champ (FCP ; FCP_1 ; FCP_2) pour vérifier si le flux binaire de la trame reçue est décalé d'au moins un bit par rapport à la trame (450 ; 450_1 ; 4500) attendue.

2. Station d'abonné (10 ; 30) selon la revendication 1, le dispositif de commande de communication (11 ; 31) étant conçu pour insérer l'au moins un champ (FCP ; FCP_2) après un champ de données (455) dans la trame (450 ; 450_1 ; 4500), notamment pour insérer l'au moins un champ (FCP ; FCP_2) dans la trame (450 ; 450_1 ; 4500) après une somme de contrôle de trame (FCRC) qui a été formée sur tous les bits dans la trame (450 ; 450_1 ; 4500).

3. Station d'abonné (10 ; 30) selon la revendication 1 ou 2, le dispositif de commande de communication (11 ; 31) étant conçu pour insérer l'au moins un champ (FCP_1) avant un champ de données (455) dans lequel sont insérées des données utiles de la trame (450 ; 450_1 ; 4500).

4. Station d'abonné (10 ; 30) selon l'une des revendications précédentes, le dispositif de commande de communication (11 ; 31) étant conçu pour configurer et/ou disposer l'au moins un champ (FCP_1) de telle sorte que le contenu de l'au moins un champ (FCP_1) dans une station d'abonné (10 ; 30) réceptrice ne doit pas seulement être utilisé pour la fonction de vérification du décalage du flux binaire, mais également pour une fonction différente de celle-ci.

5. Station d'abonné (10 ; 30) selon l'une des revendications précédentes, le dispositif de commande de communication (11 ; 31) étant conçu pour insérer l'un des champs (FCP ; FCP _1 ; FCP_2) dans la trame (450 ; 450_1 ; 4500) toujours après un nombre fixe de bits.

6. Station d'abonné (10 ; 30) selon l'une des revendications précédentes,
le dispositif de commande de communication (11 ; 31) étant conçu pour insérer l'au moins un champ (FCP ; FCP_1 ; FCP_2) en tant que bit de bourrage fixe dans la trame (450 ; 450_1 ; 4500), et
le dispositif de commande de communication (11 ; 31) étant conçu pour insérer tous les bits de bourrage fixes dans la trame (450 ; 450_1 ; 4500) conformément à une règle de bourrage de bits fixe selon laquelle un bit de bourrage fixe doit être inséré après un nombre fixe de bits.

7. Station d'abonné (10 ; 30) selon la revendication 6, le dispositif de commande de communication (11 ; 31) étant conçu pour sélectionner la valeur du champ (FCP ; FCP_1 ; FCP_2) en fonction de la valeur qui devrait être sélectionnée pour le bit de bourrage afin d'insérer un bit de bourrage inverse dans la trame (450 ; 450_1 ; 4500) après cinq bits identiques consécutifs.

8. Station d'abonné (10 ; 30) selon l'une des revendications 1 à 6, le dispositif de commande de communication (11 ; 31) étant conçu pour utiliser la même valeur pour tous les champs (FCP ; FCP_1 ; FCP_2) dans la trame (450 ; 450_1 ; 4500).

9. Station d'abonné (10 ; 30) selon la revendication 8,
le dispositif de commande de communication (11 ; 31) étant conçu pour utiliser un nombre pair de M bits pour l'au moins un champ (FCP ; FCP_1 ; FCP_2),
la première moitié des M bits ayant à chaque fois la même première valeur, et
la deuxième moitié des M bits ayant à chaque fois la même deuxième valeur, qui est l'inverse de la première valeur.

10. Station d'abonné (10 ; 30) selon la revendication 8, le dispositif de commande de communication (11 ; 31) étant conçu pour insérer dans l'au moins un champ (FCP ; FCP_1 ; FCP_2) au moins les bits de poids faible du nombre de bits de bourrage fixes insérés dans la trame (450 ; 450_1 ; 4500).

11. Station d'abonné (10 ; 30) selon la revendication 8, le dispositif de commande de communication (11 ; 31) étant conçu pour insérer dans l'au moins un champ (FCP ; FCP_1 ; FCP_2) au moins les bits de poids faible du nombre de trames (450 ; 450_1 ; 4500) qui ont déjà été envoyées sur le bus (40) par le dispositif de commande de communication (11 ; 31).

12. Station d'abonné (10 ; 30) selon l'une des revendications précédentes,
le dispositif de commande de communication (11 ; 31) étant conçu pour, après une commutation de la deuxième phase de communication (452) dans la première phase de communication (451), prévoir un bit (AH1) pendant lequel le dispositif d'émission/réception (12 ; 32) a le temps de commuter dans la deuxième phase de communication (452), et
le dispositif de commande de communication (11 ; 31) étant conçu pour, dans le cas où la station d'abonné (10 ; 20 ; 30) du système de bus (1) reçoit la trame (450 ; 450_1 ; 4500), mais n'est pas un émetteur de la trame (450 ; 450_1 ; 4500), utiliser le bit (AH1) pour vérifier si le flux binaire de la trame (450 ; 450_1 ; 4500) reçue est décalé d'au moins un bit par rapport à la trame (450 ; 450_1 ; 4500) attendue.

13. Station d'abonné (10 ; 30) selon l'une des revendications précédentes,
la trame (450 ; 450_1) formée pour le message (45) étant construite de manière compatible avec CAN FD, et
celle des stations d'abonné (10, 20, 30) du système de bus (1) qui obtient, dans une deuxième phase de communication (452) qui suit, un accès au bus (40) au moins temporairement exclusif, sans collision, étant négociée dans la première phase de communication (451).

14. Système de bus (1), comprenant
un bus (40), et
au moins deux stations d'abonné (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 30) est une station d'abonné (10 ; 30) selon l'une des revendications précédentes.

15. Procédé de communication dans un système de bus série (1), le procédé étant mis en oeuvre avec une station d'abonné (10 ; 30) du système de bus (1) qui comprend un dispositif de commande de communication (11 ; 31) et un dispositif d'émission/réception (12 ; 32), le procédé comprenant les étapes suivantes :
commande, avec le dispositif de commande de communication (11 ; 31), d'une communication de la station d'abonné (10 ; 30) avec au moins une autre station d'abonné (10 ; 20 ; 30) du système de bus (1), et
émission, avec le dispositif d'émission/réception (12 ; 32), sur un bus (40) du système de bus (1), d'un signal d'émission (TXD) généré par le dispositif de commande de communication (11 ; 31), de telle sorte que pour un message (45) qui est échangé entre les stations d'abonné (10, 20, 30) du système de bus (1), le temps de bit (t_bt) d'un signal émis sur le bus (40) dans la première phase de communication (451) est différent d'un temps de bit (t_bt) d'un signal émis dans la deuxième phase de communication (452),
**caractérisé en ce que** le dispositif de commande de communication (11 ; 31) génère le signal d'émission (TXD) selon une trame (450 ; 450_1 ; 4500) et insère dans la trame (450 ; 450_1 ; 4500) au moins un champ (FCP ; FCP_1 ; FCP_2), lequel est conçu pour vérifier si le flux binaire de la trame (450 ; 450_1 ; 4500) est reçu dans une station d'abonné (10 ; 20 ; 30) du système de bus (1), laquelle reçoit la trame (450 ; 450_1 ; 4500) mais n'est pas un émetteur de la trame (450 ; 450_1 ; 4500), est décalée d'au moins un bit par rapport à la trame (450 ; 450_1 ; 4500) attendue, de telle sorte qu'un dispositif de commande de communication (11 ; 31) du système de bus (1), dans le cas où la station d'abonné (10 ; 30) n'est pas un émetteur de la trame (450 ; 450_1 ; 4500), peut utiliser l'au moins un champ (FCP ; FCP _1 ; FCP_2) pour vérifier si le flux binaire de la trame reçue est décalé d'au moins un bit par rapport à la trame (450 ; 450_1 ; 4500) attendue.
